## Europäisches Patentamt
## European Patent Office
## Office européen des brevets

(19)

(11) Veröffentlichungsnummer: **0 149 182**
**B1**

(12) **EUROPÄISCHE PATENTSCHRIFT**

(45) Veröffentlichungstag der Patentschrift: **03.10.90**

(21) Anmeldenummer: **84115806.6**

(22) Anmeldetag: **19.12.84**

(51) Int. Cl.⁵: **C 09 K 3/18,** C 08 J 7/04, C 08 J 7/06

(54) **Wasserspreitendes Kunstoffmaterial, Verfahren zu seiner Herstellung und Verwendung als Verglasungs- und Bedachnungsmaterial.**

(30) Priorität: **03.01.84 DE 3400079**

(43) Veröffentlichungstag der Anmeldung:
**24.07.85 Patentblatt 85/30**

(45) Bekanntmachung des Hinweises auf die Patenterteilung:
**03.10.90 Patentblatt 90/40**

(84) Benannte Vertragsstaaten:
**AT BE CH DE FR GB IT LI NL SE**

(56) Entgegenhaltungen:
**EP-A-0 052 427**
**EP-A-0 074 010**
**US-A-4 410 594**

(73) Patentinhaber: **Röhm GmbH**
**Kirschenallee Postfach 4242**
**D-6100 Darmstadt 1 (DE)**

(72) Erfinder: **Krautter, Jürgen**
**Carl-Ullrich-Strasse 55**
**D-6100 Darmstadt (DE)**
Erfinder: **Dzialas, Willi**
**Brucknerstrasse 27**
**D-6103 Griesheim (DE)**

Courier Press, Leamington Spa, England.

## Beschreibung

### Gebiet der Erfindung

Die Erfindung betrifft ein wasserspreitendes Kunststoffmaterial, enthaltend einen Grundkörper aus Kunststoff mit wasserabstoßender Oberfläche und auf wenigstens einem Teil seiner Oberfläche eine wasserspreitende Schicht mit einem Gehalt an Siliciumdioxid und/oder einem nicht wasserlöslichen Metalloxid. Unter "wasserspreitend" wird die Eigenschaft einer Oberfläche verstanden, mit einem darauf aufgebrachten Wassertropfen einen Randwinkel unter 20° zu bilden.

Wasserspreitende Kunststoffe haben die Eigenschaft, daß sich Wasser, welches auf ihre Oberfläche gerät, dort nicht zu voneinander getrennten Tropfen zusammenzieht, sondern daß sich die Tropfen ausbreiten und bei Berührung zu einer geschlossenen Schicht zusammenfließen. Dadurch werden eine verbesserte Lichtreflexion an der mit Wasser befeuchteten Oberfläche und—bei durchsichtigen Kunststoffen—eine bessere Lichtdurchlässigkeit erreicht und das Abtropfen von Wasser von der Unterseite des Kunststoffkörpers erschwert. Diese Eigenschaften werden vor allem von Verglasungsmaterialien für Gewächshäuser, Schwimmhallen und ähnlichen Feuchträume verlangt. Bei diesen Werkstoffen ist es erwünscht, daß das unvermeidbar sich daran abscheidende Kondenwasser nicht tropfenförmig abfällt, sondern dem Gefälle des Materials folgend in einer geschlossenen Schicht oder wenigstens in zusammenhängenden Bahnen zum unteren Rand abfließt.

### Stand der Technik

Es sind zahlreiche Versuche unternommen worden, beschlagschützende Beschichtungen aus vernetzten hydrophilen Polymeren auf wasserabstoßenden Kunststoffoberflächen zu erzeugen. Nach DE—OS 21 61 645 wird eine derartige Beschichtung aus einem Mischpolymerisat aus Alkylestern, Hydroxylalkylestern und quartären Aminoalkylestern der Acryl- oder Methacrylsäure und Methyloläthern des Methacrylamids als Vernetzungsmittel erzeugt. Sie nehmen zunächst unter Quellung Wasser auf und gehen dabei allmählich in einen wasserspreitenden Zustand über. Infolge der Quellung wird die Beschichtung jedoch weich und empfindlich gegen mechanische Beschädigungen.

Um eine höhere mechanische Beständigkeit zu erreichen, wurden Beschichtungen mit hydrophilen anorganischen Bestandteilen in einem hydrophilen Bindemittel entwickelt. Nach JP—A 76 81 877 werden PVC- oder Polymethylmethacrylatfolien mit einer Beschichtung aus kolloidalem Aluminiumoxid als hydrophilierendem hartem Inhaltsstoff und Polyvinylalkohol und Ammoniumpolyacrylat als Bindemittel überzogen, jedoch ist auch diese Beschichtung im wassergequollenen Zustand mechanisch empfindlich.

Es ist auch schon versucht worden, benetzungsfreundliche Mittel in das Kunststoffmaterial selbst einzuarbeiten. So werden wasserspreitende Abdeckungen für Gewächshäuser und ähnliche Feuchträume nach DE—PS 2 017 002 aus einem Kunststoff mit einem Gehalt eines oberflächenaktiven Mittels, wie Polyalkylenglykol, hergestellt. Die Wirkung dieses Zusatzes ist begrenzt, dazu wird die Witterungsbeständigkeit des Kunststoffes beeinträchtigt.

In JP—A 76 06 193 werden als Verglassungsmaterial für Gewächshäuser Polymethylmethacrylatplatten mit einer Beschichtung aus 95 Teilen kollidalem Siliciumdioxid und 5 Teilen einer Dispersion eines hydrophoben Acrylharzes vorgeschlagen. Die Haftung dieser Beschichtung ist jedoch—namentlich im feuchten Zustand—völlig unbefriedigend.

Eine bessere Haftung einer beschlagschützenden Beschichtung auf Kunststoffen wird nach EP—A 51 405 mit einem aus zwei Schichten aufgebauten Überzug erreicht, wobei beide Schichten kolloidales Siliciumdioxid, ein teilhydrolysiertes Silikon und Polyvinylalkohol als Bindemittel enthalten. In der unteren Schicht ist das Verhältnis von Silicium zu Kohlenstoff größer als in der äußeren Schicht.

Eine wasserspreitende Beschichtung für Kunststoffe, aufgebaut aus einer Grundschicht aus einem teilhydrolysierten Vinylchlorid-Vinylacetat-Copolymerisat und einer wasserspreitenden Deckschicht aus anorganischen Kolloidteilchen unterschiedlicher Größenklassen und einem polymeren Bindemittel als wesentlichen Bestandteilen, ist aus EP—A 52 427 bekannt. Die Deckschicht enthält z.B. 70 oder 80% Siliciumdioxid, 16 bzw. 11% polymeres Bindemittel und 15 bzw. 11% eines nichtionischen Tensids.

Aus der japanischen Offenlegungsschrift 83/63 729 ist es bekannt eine nicht abwaschbare wasserspreitende Beschichtung auf Kunststoffen in zwei Stufen herzustellen. Als Grundbeschichtung wird eine Lösung eines wasserunlöslichen, anionaktiven Polyelektrolyten, gelöst in einem organischen Lösungsmittel, in dünner Schicht aufgetragen. Beispiele sind Mischpolymerisate von Methyl- und Butylmethacrylat und Methacrylsäure oder von Styrol und Maleinsäure. Auf die Grundbeschichtung wird ein wäßriges, positiv elektrisch geladenes anorganisches Kolloidsol aufgebracht, welches durch die Wechselwirkung mit der anionaktiven Grundbeschichtung adsorbiert wird. Ein Beispiel für ein solches Kolloidsol ist ein kationaktives Tonerdesol, welches von Nissan Chemical Industries Ltd. unter der Bezeichnung "Aluminasol 100" in den Handel gebracht wird. Obwohl diese Beschichtung eine gute wasserspreitende Wirkung ausübt, hat sie den Nachteil einer hohen Empfindlichkeit gegen mechanische Beschädigungen. Bei der Naßscheuerbeanspruchung gemäß DIN 53 778 zeigen sich bereits nach 10 Scheuerhüben steifenförmige Ablösungen und nach 50 Scheuerhüben ist die Beschichtung vollständig entfernt. Dies est für die Beanspruchungen, denen z.B. eine Gewächshausverglasung während der Errichtung und des Betriebes ausgesetzt ist, völlig unzureichend.

Aufgabe und Lösung

Die große Zahl von beschlagverhindernden Überzugssystemen für Kunststoffe läßt darauf schließen, daß das starke Bedürfnis nach einer praktisch brauchbaren Beschichtung durch die bisher entwickelten Überzüge nicht in ausreichendem Maße erfüllt worden ist. Stark hydrophile Überzugsmaterialien lassen zwar meistens eine gute Wasserspreitung erreichen, jedoch sind sie im gequollenen Zustand zu weich. Wenn man diesen Nachteil durch eine stärkere Vernetzung oder geringere Hydrophilie bekämpft, so geht mit der mechanischen Empfindlichkeit zugleich die Wasserspreitung verloren. Siliciumdioxid und verschiedene andere Metalloxide vereinigen zwar den Vorteil großer Härte und guter Benetzbarkeit durch Wasser ohne jede Quellbarkeit. Jedoch haben diese Oxide keinerlei Haftung auf der Kunststoffoberfläche. Durch haftvermittelnde Grundschichten läßt sich zwar die Haftung der Oxide verbessern, jedoch genügt sie auch dann den in der Praxis gestellten Anforderungen nicht.

In dem Maße, wie zur Verankerung der Oxide auf der Kunststoffoberfläche Bindemittel verwendet werden, geht die Benetzbarkeit der Oxide zurück und es treten die Nachteile der Bindemittel in Erscheinung: nämlich mechanische Empfindlichkeit im Falle hydrophiler Bindemittel und ungenügende Wasserspreitung im Falle hydrophober Bindemittel.

Der Erfindung liegt die Aufgabe zugrunde, den seit langem unbefriedigten Bedarf nach einer praktisch brauchbaren wasserspreitenden Kunststoffbeschichtung durch einen Überzug von gleichzeitig verbesserter Haftfestigkeit, verminderter mechanischer Empfindlichkeit im feuchten Zustand und verbesserter Dauerhaftigkeit bei hoher Wasserspreitungswirkung besser zu befriedigen. Eine beschlagschützende Wirkung in dem Sinne, daß Kondenswasser von der Beschichtung aufgenommen wird, ist nicht Ziel der Erfindung, jedoch wird baldiges Zusammenfließen der Kondenswassertröpfen angestrebt.

Es wurde gefunden, daß Teilchen kolloidaler Größe aus reinen, d.h. neutralen Silicium- und/oder Metalloxiden oder von anionisch modifizierten Silicium- und/oder Metalloxiden auf einer haftvermittelnden Schicht eines in Wasser nicht löslichen und im wesentlichen nicht quellbaren organischen Polymermaterial mit einem Gehalt an polaren Gruppen wesentlich stärker haften als kationisch modifizierte anorganische Kolloidteilchen. Das gilt vor allem für haftvermittelnde Schichten, deren polare Gruppen nicht basisch und nicht salzartig sind.

Die Haftfestigkeit der wasserspreitenden Schicht, gemessen durch die Hubzahl im Naßscheuertest, nimmt in typischen Fällen im wenigstens zwei Größenordnungen und in günstigen Fällen um drei bis vier Größenordnungen zu.

Es ist zwar bekannt, Überzüge aus kolloidaler Kieselsäure auf Substrate mit strukturierter Oberfläche, wie texturierten Fasern oder Papier, aufzubringen, z.B. um deren Gleitfähigkeit herabzusetzen. In diesen Fällen verankert sich die Kieselsäure in der Struktur der Oberfläche. Bei der Anwendung als Antiblockmittel auf Kunststoffolien wird eine dauernde Haftung weder angestrebt noch erreicht; es genügt, wenn das Kleben der gerollten Folie bis zur Enthanme von der Vorratsrolle verhindert wird. Die Antiblockwirkung wird auch durch eine teilweise zerstörte Kieselsäurebeschichtung und die losgelösten Teilchen bewirkt.

Es ist überraschend, daß es durch die Zwischenschaltung einer nicht quellbaren organischen Polymerschicht mit polaren Gruppen möglich ist, die bindemittelfreie Schicht der genannten neutralen oder schwach anionischen Silicium- und/oder Metalloxide fest haftend an eine wasserabstoßende Kunststoffoberfläche zu binden. Darüber hinaus wurde festgestellt, daß die Lichtdurchlässigkeit des beschichteten Kunststoffmaterials bereits im trockenen Zustand höher liegt als vor der Beschichtung.

Das zu beschichtende Kunststoffmaterial

Die äußere Gestalt der Kunststoffmaterialien, die gemäß der Erfindung beschichtet werden, kann sehr unterschiedlich sein. Es wird nur vorausgesetzt, daß es sich um ein Material handelt, bei dessen Anwendung die Ansammlung von getrennten Wassertropfen an ihrer Oberfläche unerwünscht und die Bildung einer zusammenhängenden Wasserschicht erwünscht ist. Dies gilt vorzugsweise für Verglasungs- und Abdeckungsmaterial für feuchte Räume.

Bevorzugte Materialien sind flächenförmige Werkstoffe, wie Folien und Tafeln. Zu den Folien zählen Flächengebilde unter 1 mm Dicke bis zu etwa 0,01 mm und vorzugsweise 0,05 bis 0,5 mm Dicke. Zu den Tafeln zählen steife Flächengebilde ab 1 mm Dicke bis zu etwa 10 mm und vorzugsweise 2 bis 6 mm Dicke. Besonders bevorzugt sind einstückig extrudierte Hohlkammerplatten bzw. Stegdoppelplatten, die in der Regel eine Gesamtdicke zwischen 5 und 50 mm haben. Ihre Außenwände haben meistens eine Dicke von 1/20 bis 1/8 der Gesamtdicke und sich durch senkrecht oder schräg dazu verlaufende Stege einstückig miteinander verbunden.

Die Oberflächen des zu beschichtenden Kunststoffmaterials sind in der Regel eben und glatt und meistens mehr oder weniger glänzend. Das Kunststoffmaterial kann durchsichtig, durchscheinend oder lichtdurchlässig sein; vorzugsweise ist es klar und farblos oder weiß durchscheinend.

Die Erfindung eignet sich für alle Kunststoffe deren Oberflächen von sich aus wasserabstoßend sind. Das sind vor allem Kunststoffe, die selbst keine oder vernachlässigbar wenige polare Gruppen in ihrer Struktur enthalten. Dazu zählen z.B. Polyäthylen, Polypropylen, Polystyrol und dessen schlagzäh modifizierte Abkömmlinge, Polyvinylchlorid und Polyester. Sie werden als wasserabstoßend bezeichnet, wenn der Randwinkel eines darauf liegenden Wassertropfens mehr als 70° beträgt. Bevorzugte Kunststoffe sind Polymetharylate (Acrylglas) und Polycarbonate, insbesondere des Bisphenols-A; diese Werkstoffe werden als steife Kunststoffverglasungsmaterialien für Gewächshäuser und Schwimmhallen eingesetzt, und zwar vorzugsweise in Form von extrudierten Hohlkammerplatten.

Die wasserspreitende Schicht

Kann auf allen Oberflächen des Kunststoffgrundkörpers angebracht werden, jedoch wird es häufig vorgezogen, nur eine Seite eines flächenförmigen Materials zu beschichten. Bei der Verwendung als Verglasungs- oder Bedachungsmaterial liegt die beschichtete Seite innen.

Als wasserspreitende Schicht eignen sich neben den reinen Oxiden, wie Siliciumdioxid und Aluminiumoxid, auch Oxid-Gemische bzw. Mischoxide. Vorteilhaft sind z.B. Silicium-Aluminium-Mischoxide mit einem Si/Al-Verhältnis von 1:1 bis 30:1. Sie können teilweise mit Basen neutralisiert sein und enthalten dann Kationen, wie Alkali- oder Ammoniumionen. Die letzteren verflüchtigen sich leicht beim Trocknen.

Andere Metalloxide, die neben oder anstelle von Silicium-bzw. Aluminiumoxid in der wasserspreitenden Schicht enthalten sein können, leiten sich z.B. von den Elementen Zink, Titan, Zirkon oder Chrom ab. Bevorzugt werden farblose Metalloxide. Voraussetzung ist stets, daß die Oxide in Wasser praktisch unlöslich sind. Die Löslichkeit der Oxide als solcher oder ihrer hydratisierten Formen in Wasser von 20°C soll unter 200 ppm liegen.

Die Oxidschicht übt eine stark wasserspreitende Wirkung aus. Sie ist anscheinend sowohl auf die gute Wasserbenetzbarkeit der Oxide als auch auf die submikroskopische Rauhigkeit der Oxidschicht zurückzuführen.

Die Metalloxide können schon in kolloidaler Form aufgebracht werden, insbesondere in Wasser als suspendierendem Medium, jedoch sind auch Kolloide in polaren Flüssigkeiten, wie Dimethylformamid oder Isopropanol, oder in wäßrigen Lösungsmitteln, wie Mischungen von Aceton, Methanol oder Äthanol mit Wasser verwendbar. Die Kolloidteilchen haben eine Größe unter 200 nm, vorzugsweise unter 120 nm, insbesondere 5 bis 100 nm. Sie enthalten nicht in allen Fällen die reinen Oxide, sondern mehr oder weniger hydratisierte und neutralisierte Formen, die jedoch im Zusammenhang mit der vorliegenden Erfindung von den reinen Oxiden nicht unterschieden zu werden brauchen.

Kolloidale Kieselsäure ist in verschiedenen verwendbaren Präparaten im Handel. Besonders geeignet sind anionische Typen, die zur Stabilisierung Kationen, z.B. Alkali- oder Ammoniumionen, enthalten.

Wesentlich für die Erfindung ist, daß die wasserspreitende Schicht—abgesehen von einem eventuellen Tensidgehalt—überwiegend, d.h. zu mehr als 90 Gew.-%, vorzugsweise zu mehr als 99 Gew.-% aus Siliciumdioxid und/oder dem Metalloxid besteht. Vorzugsweise wird auf weitere Bestandteile, die nicht wasserlöslich sind, vollständig verzeichtet. Auf jeden Fall muß eine Wasserspreitung bestehen, die einem Randwinkel eines Wassertropfens unter 20°, vorzugsweise unter 10° entspricht.

Ein weiteres wichtiges Merkmal der wasserspreitenden Schicht ist ihre Dicke. Es wurde festgestellt, daß die Delaminationsneigung der Schicht mit der Dicke stark zunimmt. Da für die Wirksamkeit der Schicht nur ihre geschlossene Oberfläche aber nicht ihre Dicke von Bedeutung ist, ergibt, die dünnstmögliche Schicht, die sich aus dem eingesetzten Kolloid herstellen läßt, bereits die bestmögliche Wirkung. Daher wird eine Schichtdicke von 0,01 bis 4 μm, insbesondere 0,1 bis 1 μm bevorzugt.

Die haftvermittelnde Schicht

Befindet sich zwischen der wasserspreitenden Schicht und der wasserabstoßenden Kunststoffoberfläche. Wenn der Grundkörper nur teilweise mit einer wasserspreitenden Beschichtung versehen ist, genügt es, wenn auch die haftvermittelnde Schicht nur in den entsprechenden Teilbereichen aufgebracht wird.

Die wesentliche Eigenschaft der haftvermittelnden Schicht liegt darin, daß sie eine größere Haftfestigkeit sowohl zu der Kunststoffoberfläche als auch zu der wasserspreitenden Schicht besitzt als die letztere zu der Kunststoffoberfläche. Während es zahlreiche organische Polymerstoffe gibt, die an einer wasserabstoßenden Kunststoffoberfläche gut haften, derarf es zu einer ausreichenden Haftung an der wasserspreitenden Schicht bestimmter Eigenschaften. Sie beruhen auf den polaren Gruppen in der haftvermittelnden Schicht in Verbindung mit ihrer Unlöslichkeit und Unquellbarkeit in Wasser. Die polaren Gruppen müssen nicht notwendigerweise chemisch an den Hauptbestandteil der haftvermittelnden Schicht gebunden sein, obwohl diese bevorzugt ist; vielmehr genügt es, wenn sie chemisch an einen Nebenbestandteil gegunden sind. Es wird angenommen, daß die Haftung durch eine Wechselwirkung zwischen den Sauerstoffatomen oder Hydroxylgruppen der Oxide und den polaren Gruppen zustande kommt. Da Wassermoleküle ebenfalls zu einer starken Wechselwirkung mit den Oxidsauerstoffatomen fähig sind und die polaren Gruppen verdrängen können, soll das Polymermaterial der haftvermittelnden Schicht möglichst wenig Wasser aufnehmen. Darüber hinaus würde die Haftfestigkeit auch durch morphologische Veränderungen infolge häufiger Quellung und Entquellung beeinträchtigt. Daraus erhalt die Bedeutung einer geringeren Quellbarkeit in Verbindung mit einer begrenzten Polarität, obwohl die Erfindung damit nicht auf eine bestimmte Theorie festgelegt werden soll.

Das organische Material der haftvermittelnden Schicht besteht aus wenigstens einem makromolekularen Stoff mit einem gewichtsmittleren Molekulargewicht über 1000, vorzugsweise über 10.000. Es kann sich um ein rein organisches Material mit einem durchgehenden Kohlenstoffgerüst bzw. einem von Sauerstoff- oder Stickstoffatomen unterbrochenen Kohlenstoffgerüst oder ein gemischt

4

organisch-anorganisches Material handeln, dessen durchgehendes Grundgerüst ganz oder teilweise aus Heteroatomen, wie Sauerstoff und Silicium, besteht.

Als polare Gruppen sind besonders Hydroxyl-, Carboxyl-, Sulfonyl-, Carbonsäureamid, Nitril- und Silanol-Gruppen zu nennen. Sie sind vorzugsweise Bestandteil einer makromolekularen Verbindung, die gleichzeitig unpolare Gruppen enthält, wie Alkyl-, Alkylen-, Aryl- oder Arylengruppen. Das Verhältnis von polaren zu unpolaren Gruppen muß so gewählt werden, daß Haftung sowohl zu der wasserabstoßenden, also unpolaren Kunststoffoberfläche als auch zu der wasserspreitenden, also hydrophilen Schicht erreicht wird. Die Polarität darf nicht so groß sein, daß das Material der Haftvermittelnden Schicht selbst wasserlöslich oder wasserquellbar wäre. Die Quellung bei Sättigung mit Wasser bei 20° liegt nicht über 10 Vol-% und vorzugsweise nicht über 2 Vol.-%. Die Polarität soll jedoch auch nicht so niedrig sein, daß das Material in völlig unpolaren Lösungsmitteln, wie Benzin, löslich wäre. Die meisten geeigneten Materialien sind in begrenzt polaren organischen Lösungsmitteln löslich, wie Chlorkohlenwasserstoffen, Erstern, Ketonen, Alkoholen oder Äthern oder deren Gemischen mit Aromaten. Das Material der haftvermittelnden Schicht ist in der Regel nicht selbst wasserspreitend. Wassertropfen auf seiner Oberfläche bilden meistens Randwinkel von über 20°, insbesondere 20° bis 70°.

Die erforderliche Ausgewogenheit der Affinitäten zu den beiden angrenzenden Schichten wird im allgemeinen erreicht, wenn das Material der haftvermittelnden Schicht 0,4 bis 100 Milliäquivalent polare Gruppen je 100 g des Polymermaterials enthält.

Weiterhin ist es von Vorteil, wenn das Polymermaterial dreidimensional vernetzt ist, jedoch darf eine solche Vernetzung in dem Fall, daß die haftvermittelnde Schicht aus einer Lösung des Polymermaterials erzeugt wird, erste nach Bildung der Schicht herbeigeführt werden. Die Vernetzung vermindert die Quellfähigkeit. Sie soll jedoch nicht so stark sein, daß das Polymermaterial vollständig hart und spröde ist. Günstig ist eine gewisse elastische Dehnbarkeit des—gegebenenfalls vernetzen—Polymermaterials.

Eine geeignete Klasse von Polymermaterialien besteht aus Polymerisaten bzw. Mischpolymerisaten von Vinylmonomeren. Wenigstens ein Teil der Vinylmonomereinheiten muß eine polare Gruppe der genannten Art tragen. Sie kann aus den zugrundeliegenden Monomeren stammen oder durch nachträgliche Umsetzung in das Polymere eingeführt worden sein. Ein Teil der Vinylmonomeren enthält unpolare Gruppen, wie Alkyl-, Alkylen-, Aryl- oder Arylengruppen.

Die polaren Gruppen unterscheiden sich in ihrer polarisierenden Wirksamkeit. Diese nimmt in der Reihenfolge Nitril, Hydroxyl, prim. Carbonsäureamid, Carboxyl, Sulfonyl, Silanol zu. Je stärker die polarisierende Wirkung ist, um so geringer liegt der erforderliche Gehalt in dem Polymermaterial. Während von den schwach polaren Gruppen 4 bis 100 mÄquivalent polare Gruppen je 100 g Polymermaterial verwendet werden, genügen 0,4 bis 20 mÄquivalent/100 g der stark polaren Gruppen. Wird der Gehalt an polaren Gruppen zu niedrig gewählt, so wird keine ausreichende Haftung der wasserspreitenden Schicht erreicht. Ist dagegen der Gehalt an polaren Gruppen zu hoch, steigt die Wasserquellbarkeit zu stark an, was wiederum die Haftung vermindert.

Zu den Vinylmonomeren, die die genannten Gruppen tragen, gehören z.B. Acryl- und Methacrylnitril, Hydroxyalkylester ungesättigter polymerisierbarer Carbonsäuren, insbesondere solche mit 2 bis 6 C-Atomen im Hydroxyalkylrest, Glycidylacrylat und -methacrylat bzw. die durch Hydrolyse daraus entstehenden Dihydroxyalkylester, die Amide der genannten Säuren, vor allem Acrylamid und Methacrylamid, Acryl-, Methacryl-, Malein-, Fumar- oder Itakonsäure, ferner Vinylsulfonsäure, Styrolsulfonsäure, Acryl- und Methacrylamidoalkansulfonsäuren, Acryloxy- und Methacryloxyalkansulfonsäuren, Acryloxy- und Methacryloxy-alkyl-trialkylsilane bzw. deren Hydrolyseprodukte. Polare Gruppen, die nicht basisch und nicht salzartig sind, sind bevorzugt, insbesondere Hydroxyl-, Carboxyl-, Carbonamido- und Silanolgruppen.

Als Vinylmonomere mit unpolaren Gruppen sind die Alkylester von ungesättigten, polymerisierbaren Säuren, wie z.B. Acryl-, Methacryl-, Malein-, Fumar- oder Itakonsäure, zu nennen. Die Alkylreste enthalten im allgemeinen 1 bis 18 C-Atome, vorzugsweise 1 bis 8 C-Atome. Weiterhin gehören zu diesen Monomeren Styrol, Vinyltoluol, Vinylacetat, Vinylpropionat und andere Vinylester von Fettsäuren, Vinylchlorid, Vinylidenchlorid.

Mischpolymerisate aus polaren und unpolaren Vinylmonomeren sind nach bekannten Verfahren der radikalischen Polymerisation herstellbar, z.B. durch Lösungs- oder Emulsionspolymerisation. Die entstehenden Lösungen oder Dispersionen können, gegebenenfalls nach Verdünnung, unmittelbar zur Herstellung der haftvermittelnden Schicht eingesetzt werden.

Andere Klassen von geeigneten Polymermaterialien für die haftvermittelnde Schicht sind durch polare Gruppen modifizierte Polyester, Polyäther, Polycarbonate, Polyurethane oder Epoxidharze. Die polaren Gruppen können Bestandteil der eingesetzten Ausgangsstoffe sein oder sie können nachträglich in das Polymermaterial eingeführt worden sein. Polymermaterialien mit Hydroxylgruppen können z.B. mit Silanen, die wenigstens zwei an Silicium gebundene Halogenatome, Alkoxygruppen oder Aryloxygruppen tragen, umgesetzt werden. Als Beispiele seien Tetrachlorsilan, Tetraäthoxysilan, Tetraphenoxysilan, Methyltrimethoxysilan oder Methyl-trichlorsilan genannt. Durch Hydrolyse der so eingeführten Gruppen, gegebenenfalls erst nach Bildung der haftvermittelnden Schicht entstehen polare Silanol-Gruppen. Sie haben vor den anderen polaren Gruppen den Vorteil, daß sie eine sehr starke Bindung gegenüber Silicium- und Aluminiumoxyd ausüben, aber die Wasserquellbarkeit der haftvermittelnden Schicht kaum beeinflussen. Daher bilden Polymermaterialien mit Si-OH-Gruppen als haftvermittelnde Schicht eine bevorzugte Ausführungsform der Erfindung. Die haftvermittelnde Wirkung kommt an den beiden Grenzflächen zu der wasserabstoßenden Kunststoffschicht einerseits und der wasserspreitenden Schicht andererseits zustande. Dazu genügt schon eine Schicht von geringstmöglicher Dicke. Die Schicht ist daher in der Regel nur 0,01 bis 20 µm und vorzugsweise 0,01 bis 2 µm dick. Geringere Dicken sind nur schwer ohne Fehlstellen zu erzeugen. Größere Dicken sind weniger wirtschaftlich, aber technisch voll wirksam.

Das Beschichtungsverfahren

Wird zweckmäßig unmittelbar im Anschluß an die Herstellung des Grundkörpers aus Kunststoff durchgeführt. In manchen Fällen, beispielsweise bei der Beschichtung von Polyolefinkunststoffen, ist eine Koronabehandlung der zu beschichtenden Oberfläche vor Aufbringung der haftvermittelnden Schicht zweckmäßig.

Die haftvermittelnde Schicht kann aus einer wäßrigen Dispersion oder einer organischen Lösung des Überzugsmittels aufgebracht werden. Wegen der außerordentlich geringen Dicke der Schicht kann die Dispersion oder Lösung in stark verdünnter Form aufgetragen werden. Konzentrationen von 0,1% bis 40%, vorzugsweise 1—10%, sind zweckmäßig. Das flüssige Beschichtungsmittel kann durch Streichen, Gießen, Walzenauftrag, Sprühen oder andere bekannte Methoden aufgebracht werden. Die aufgetragene Beschichtungsflüssigkeit kann erforderlichenfalls mit einer Rakel, z.B. einer Draht-, Zahn-, Gummi- oder Luftrakel, gleichmäßig verteilt werden. Unmittelbar nach dem Auftrag wird die flüssige Komponente verdampft, beispielsweise in einem Warmluft-Trockner. Anschließend wird in gleichartiger Weise die Oxidschicht aufgebracht. Vorzugsweise wird eine kolloidale wäßrige Lösung bzw. Dispersion des Oxids aufgetragen. Es ist auch möglich, eine Verbindung des Siliciums oder des Metalls aufzutragen, die auf der beschichteten Oberfläche hydrolysiert wird. Beispielsweise kann eine Lösung eines Orthokieselsäureesters in schwach angesäuertem Alkohol aufgetragen werden. Der Ester hydrolysiert während oder nach dem Trocknen der Beschichtung. Es ist wichtig, daß die Beschichtungsflüssigkeit eine geschlossene Schicht bildet, was erforderlichenfalls durch Zugabe von—vorzugsweise nicht-ionischen—Tensiden gefördert werden kann. Als Tenside eignen sich beispielsweise oxäthylierte Fettalkohole in einer Konzentration von 2 bis 20 Gew.-% Tensid, bezogen auf den Oxidgehalt, vorzugsweise 3 bis 5 Gew.-%, Vorzugsweise wird nicht mehr von dem Tensid eingesetzt als zur gleichmäßigen Benetzung gerade ausreicht. Das Wasser wird anschließend verdampft, wiederum vorzugsweise in einem Warmluft-Trockner. Dabei steigt die Temperatur in der Beschichtung meist nicht über 50 bis 60°C an. Die Abriebfestigkeit und Haftung werden nochmals spürbar verbessert, wenn die getrocknete Beschichtung noch einige Zeit höher erwärmt wird, beispielsweise wenigstens 3, vorzugsweise 5 bis 10 min auf über 80°C. Je nach der Art des Kunststoffes können Temperaturen bis über 100°C angewandt werden, gegebenenfalls bis zu 150°C.

Danach ist der beschichtete Kunststoffkörper für den vorgesehenen Einsatz verwendbar. Für den Transport vom Herstellungsbetrieb zum Anwendungsort werden die Oberflächen starrer Kunststoffkörper meistens durch eine schwach haftende, leicht abziehbare Folie geschützt. Die Schutzfolie kann aus Papier oder Kunststoff bestehen; bevorzugt sind Polyolefinfolien. Es hat sich gezeigt, daß dafür gebräuchliche Schutzfolien, die eine Haftkleberschicht aufweisen, stärker als erwünscht an der beschichteten Kunststoffoberfläche haften. Um das Abziehen der Schutzfolie am Anwendungsort zu erleichtern, kann auf die wasserspreitende Beschichtung eine weitere dünne Schicht aus einem wasserlöslichen Material aufgetragen werden. Geeignet sind z.B. Dextrine, Celluloseäther, Natriumpolyacrylat und -methacrylat, Polyvinylalkohol oder Gelatine. Von diesen Zwischenschichten läßt sich die Schutzfolie leicht abziehen. Die wasserlösliche Zwischenschicht braucht nicht entfernt zu werden, da sie selbst wasserspreitend wirkt. sie geht mit der Zeit mit abfließendem Kondenswasser verloren und läßt dann die erfindungsgemäße, dauerhaft wasserspreitende Beschichtung zurück.

Beurteilung der wasserspreitenden Beschichtung

Die Nachteile der Kondenswaserbildung an der Unterseite von unbeschichteten Kunststoff-Verglasungen, vor allem bei Gewächshäusern, beruhen auf der Verminderung der Lichtdurchlässigkeit und auf dem Tropfenfall. Beides wird durch unzureichende Wasserspreitung verursacht.

Kunststoffe, wie Polymethylmethacrylat und Polycarbonat, haben eine niedrige Festkörper-Oberflächenspannung und sind infolgedessen durch Wasser schwer benetzbar. Der Randwinkel eines Wassertropfens auf der Oberseite einer waagerecht liegenden unbeschichteten Platte aus diesen Kunststoffen beträgt 75°. Als Randwinkel wird der Winkel zwischen der benetzten Oberfläche und der Tangente an die Oberfläche des Wassertropfens an der Berührungsstelle mit der Oberfläche verstanden. Eine Methode zur Bestimmung des Randwinkels ist in DE—OS 20 17 002, Spalte 3, Zeilen 23—48 angegeben.

Tropfen mit einem Randwinkel von 75° sind nahezu halbkugelförmig. Das von der Rückseite in den Tropfen einfallende Licht wird zu einem erheblichen Anteil reflektiert und geht dadurch für die Beleuchtung eines verglasten Raumes und im Falle von Gewächshäusern für das Pflanzenwachstum verloren.

Der Tropfenfall kommt dadurch zustande, daß mehr oder weniger halbkugelförmige Kondenswassertropfen in Abhängigkeit vom Neigungswinkel der Verglasung und der Tropfengröße zu laufen beginnen und sich auf ihrem Weg mit anderen Tropfen vereinigen. Sobald eine kritische Größe erreicht ist, fällt der Tropfen ab. Unter der Verglasung wachsende Pflanzenkulturen können dadurch Schaden nehmen.

6

Die Kondenswasserbildung kann auch an einer wasserspreitenden Fläche nicht verhindert werden. Die kondensierende Wassermenge hängt nur davon ab, wie stark der Taupunkt der Luft an der Verglasung unterschritten wird. Die an einer wasserspreitenden Oberfläche kondensierten Wassertropfen haben einen kleineren Randwinkel und verursachen weniger oder keine Reflexion des von der Rückseite einfallenden Lichts. Außerdem fließen sie schon bei kleiner Tropfengröße zusammen und laufen in Bahnen oder als Film in Gefällerichtung ab, so daß je nach der wasserspreitenden Wirkung weniger oder gar kein Wasser abtropft.

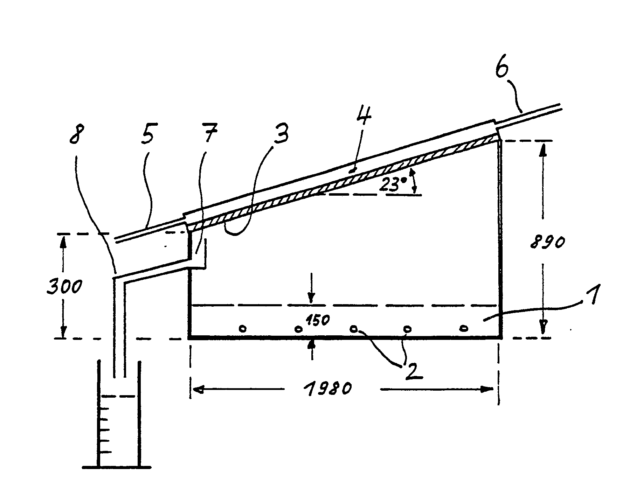

Zur Beurteilung der wasserspreitenden Wirkung verschiedener Verglasungsmaterialien wurde eine kastenförmige Apparatur verwendet, die in der Figur im Schnittbild unter Angabe der Abmessungen in Millimetern dargestellt ist. Die Tiefe beträgt gleichmäßig 230 mm; die vor und hinter der Schnittebene liegenden Seitenflächen sind geschlossen. Der Boden der Apparatur ist mit einer 150 mm hohen Schicht 1 aus Wasser bedeckt, das mittels Heizelementen 2 konstant auf 40°C gehalten wird.

Das zu prüfende Verglasungsmaterial 3 bildet die Unterseite einer Hohlkammer 4, die über die Zuflußleitung 5 und die Abflußleitung 6 von Wasser von 13°C durchströmt wird.

Das Verglasungsmaterial 3 ist in einem Winkel von 23° angeordnet. Sofern es eine wasserspreitende Beschichtung trägt, befindet sich diese an der Unterseite. Das ablaufende Kondenswasser wird in einer Rinne 7 gesammelt und über eine Leitung 8 in ein Meßgefäß 9 geleitet.

Zur Bewertung wird die innerhalb 24 Stunden gesammelte Wassermenge bestimmt. Da die Kondenswassermenge bei allen Versuchen nahezu gleichgroß sein dürfte, entspricht der Fehlbetrag der gesammelten Wassermenge von einem schlecht spreitenden Verglasungsmaterial gegenüber der Wassermenge von einem optimal spreitenden Material der abgetropften Wassermenge. Eine völlig gereinigte und entfettete Glasoberfläche führt praktisch nicht zur Tropfenbildung und kann als optimaler Standard eingesetzt werden.

Zur Bewertung verschiedener Verglassungsmaterialien gehört als wesentliche Eigenschaft die Dauerhaftigkeit bzw. mechanische Empfindlichkeit gegenüber mechanischer Beanspruchung im Naßzustand. Daher wurden die untersuchten Verglasungsmaterialien der Naßscheuerbeanspruchung gemäß DIN 53778 (entspricht ASTM D 2486-69T) unterworfen und die Zahl der Scheuerhübe festgestellt, die zu einer deutlichen Minderung der Wasserspreitfähigkeit führen.

Die Ergebnisse des Kondenswassertests und der Naßscheuerbeanspruchung sind für die untersuchten Verglasungsmaterialien in der nachfolgenden Tabelle zusammengefäßt.

| Substrat | Haft-vermit-telnde Schicht | wasser-sprei-tende Schicht | Naßscheuer-festigkeit (Zahl der Scheuerhübe) | Kondens-wassermenge in ml/24 h |
|---|---|---|---|---|
| Silikatglas | ohne | ohne | — | 1400 |
| PMMA | ohne | ohne | — | 70 |
| Silikatglas | ohne | A | 2 | 1400 |
| PMMA | ohne | A | 2 | 650* |
| PMMA | ohne | B | 2 | 1400 |
| PMMA | M | B | 2 | — |
| PMMA | ohne | C | 10 | — |
| PMMA | N | C | 100—200 | —(Beisp. 5) |
| PMMA | M | C | >20.000 | 1400 (Beisp. 7) |
| PMMA | ohne | D | 10 | — |
| PMMA | N | D | 200—500 | —(Beisp. 1) |
| PMMA | M | D | >20.000 | 1400 (Beisp. 3) |

Erläuterungen:

\* Die wasserspreitende Schicht war anfangs gut wirksam, jedoch nach 12 Std. abgelöst

N=haftvermittelnde Schicht aus einem Mischpolymerisat aus Butylmethacrylat, Methylmethacrylat, alkyliertem Methylolmethacrylamid, Hydroxyäthylacrylat

M=haftvermittelnde Schicht aus einem Mischpolymerisat aus Methylmethacrylat und Methacryloxypropyl-trimethoxysilan

A=handelsübliche wasserspreitende Beschichtung für Silikatglas oder Kunststoffe (Sunclear G, Solar Sunstill, USA)

B=wie A, jedoch nach dem Trocknen 5 min bei 80°C wärmebehandelt

C=handelsübliche wäßrig-kolloidale, schwach anionische Kieselsäure (Kieselsol A200, Bayer AG)

D=handelsübliches wäßrig-kolloidales, schwach anionisches, oberflächlich mit Aluminiumoxid modifiziertes Siliciumdioxid, (Ludox AM, DuPont)

PMMA=Polymethylmethacrylat

Beispiel 1

Eine Platte aus extrudiertem Polymethylmethacrylat wird auf einer Oberfläche mittels einer Drahtrakel mit einem 4 µm dicken Film einer 2,5-prozentigen Lösung eines Mischpolymerisats aus 47 Gew.-% Butylmethacrylat, 47 Gew.-% Methylmethacrylat, 3 Gew.-% eines alkylierten N-Methylolmethacrylamids und 3 Gew.-% Hydroxyäthylacrylat in einem Gemisch aus Isopropylalkohol und Toluol überzogen. Das Mischpolymerisat enthält 26 mÄq polare Gruppen/100 g. Nach dem Trocknen ist die Polymerisatschicht 0,1 µm dick. Sie wird 5 min auf 80°C erhitzt und nach dem Abkühlen mit einer 12 µm dicken Schicht eines 3-prozentigen, schwach anionischen, oberflächlich mit Aluminiumoxid modifizierten wäßrigen Kieselsols (Handelsprodukt Ludox AM, DuPont), das 001 Gew.-% eines achtfach oxäthylierten Isotridecylalkohols als nichtionogenen Emulgator enthält, überzogen. Die noch feuchte Beschichtung wird 5 min in einem Umluftwärmeschrank bei 80°C getrocknet. Die entstandene $SiO_2$-Schicht hat eine Dicke von 0,15 µm.

Ein Wassertropfen, der auf die flach liegende Beschichtung aufgebracht wird, spreitet bis zu einem Bandwinkel von weniger als 10°. Beim Naßscheuertest wird die Beschichtung nach 200 bis 500 Scheuerhüben unwirksam.

Beispiel 2

Das Verfahren gemäß Beispiel 1 wird wiederholt, jedoch wird die haftvermittelnde Schicht aus einem Mischpolymerisat aus 47 Gew.-% Butylmethacrylat, 47 Gew.-% Methylmethacrylat, 3 Gew.-% Glycidylmethacrylat und 3 Gew.-% Methacrylsäure hergestellt. Unter der Annahme einer vollständigen Umsetzung der Glycidylgruppen mit den Carboxylgruppen der Methacrylsäure enthält die Schicht je 100 g Polymermaterial 21 mÄq Hydroxyl- und 14 mÄq Carboxylgruppen, was insgesamt 35 mÄq/100 g an polaren Gruppen entspricht. Die wasserspreitende Schicht wird wie in Beispiel 1 aufgebracht.

Der Randwinkel eines auf die Schicht aufgebrachten Wassertropfens ist kleiner als 10°. Die Beschichtung ist nach 20.000 Scheuerhüben noch voll speitungswirksam.

Beispiel 3

Das Verfahren gemäß Beispiel 1 wird wiederholt, jedoch wird die haftvermittelnde Schicht aus einem Mischpolymerisat aus 87,6 Gew.-% Methylmethacrylat und 12,4 Gew.-% γ-Methacryloxypropyl-trimethoxysilan erzeugt. Sie enthält nach Hydrolyse der Siloxangruppen 50 mÄq/100 g an polaren Silanolgruppen.

Der Randwinkel eines auf die Beschichtung aufgebrachten Wassertropfens ist kleiner als 10°. Die Beschichtung ist nach 20.000 Scheuerhüben noch voll wirksam.

Beispiel 4

Das Verfahren gemäß Beispiel 1 wird wiederholt, jedoch wird die haftvermittelnde Schicht aus einem Mischpolymerisat aus 85,6 Gew.-% Methylmethacrylat, 12,4 Gew.-% γ-Methacryloxypropyl-trimethoxysilan und 2 Gew.-% N-Butoxymethylmethacrylamid erzeugt. Sie enthält nach Hydrolyse der Siloxangruppen 50 mÄq/100 g an polaren Silanolgruppen.

Der Randwinkel eines auf die Beschichtung aufgebrachten Wassertropfens ist kleiner als 10°. Die Beschichtung ist nach 10.000 Scheuerhüben noch voll wirksam.

Beispiele 5—8

Die Beschichtungsverfahren gemäß den Beispielen 1 bis 4 werden mit dem Unterschied wiederholt, daß ein anderes schwach anionisches, wäßriges Kieselsol (Handelsprodukt Kieselsol A200, Bayer AG) in der gleichen Konzentration eingesetzt wird.

Die Randwinkel liegen an allen Fällen unter 10°. Im Naßscheuertest tritt bei der haftvermittelnden Schicht gemäß Beispiel 1 nach 100 bis 200 Scheuerhüben ein Wirksamkeitsverlust ein (Beispiel 5). Die anderen Beschichtungen waren nach 20.000 Scheurhüben noch voll wirksam.

**Patentansprüche**

1. Wasserspreitendes Kunststoffmaterial, enthaltend einen Grundkörper aus Kunststoff mit wasserabstoßender Oberfläche und auf wenigstens einem Teil seiner Oberfläche eine wasserspreitende Beschichtung, die aus einer auf die Oberfläche des Kunststoffes aufgebrachten haftvermittelnden Schicht aus einem in Wasser nicht löslichen und im wesentlichen nicht quellbaren, in organischen Lösungsmittel löslichen organischem Polymermaterial mit einem Gehalt an polaren Gruppen und einer auf die haftvermittelnde Schicht aufgebrachten wasserspreitenden Schicht aus einem anorganischen Kolloidsol besteht, dadurch gekennzeichnet, daß die wasserspreitende Schicht aus Teilchen kolloidaler Größe von Siliciumdioxid und/oder einem nicht wasserlöslichen Metalloxid oder einem anionisch modifiziertem Siliciumdioxid oder Metalloxid aufgebaut ist. und keine Bindemittel enthält.

2. Wasserspreitendes Kunststoffmaterial nach Anspruch 1, dadurch gekennzeichnet, daß die polaren Gruppen der haftvermittelnden Schicht nicht basisch und nicht salzartig sind.

3. Wasserspreitendes Kunststoffmaterial nach den Ansprüchen 1 oder 2, dadurch gekennzeichnet, daß die wasserspreitende Schicht 0,01 bis 4 µm dick ist.

4. Wasserspreitendes Kunststoffmaterial nach den Ansprüchen 1 bis 3, dadurch gekennzeichnet, daß die haftvermittelnde Schicht 0,01 bis 20 µm dick ist.

5. Wasserspreitendes Kunststoffmaterial nach den Ansprüchen 1 bis 4, dadurch gekennzeichnet, daß es über der wasserspreitenden Schicht eine wasserlösliche Beschichtung und eine daran abziehbar haftende Schutzfolie enthält.

6. Verfahren zur Herstellung eines wasserspreitenden Kunststoffmaterials gemäß Anspruch 1, durch Beschichtung eines Grundkörpers aus Kunststoff, der eine wasserabstoßende Oberfläche aufweist, zuerst mit einer haftvermittelnden Shicht aus einem in Wasser nicht löslichen und im wesentlichen nicht quellbaren organischen Polymermaterial mit einem Gehalt an polaren Gruppen und danach mit einer wasserspreitenden Schicht aus einem anorganischen Kolloidsol, dadurch gekennzeichnet, daß ein Kolloidsol von kolloidalem Siliciumdioxid und/oder einem kolloidalen, nicht wasserlöslichen Metalloxid und/oder von einem anionisch modifizierten Siliciumdioxid oder Metalloxid eingesetzt oder die haftvermittelnde Schicht mit einer Lösung oder Dispersion einer zu den genannten Oxiden hydrolysierbaren Verbindung des Siliciums und/oder des Metalls überzogen wird.

7. Verfahren nach Anspruch 6, dadurch gekennzeichnet, daß eine wäßrig-kolloidale Lösung bzw. Dispersion eingesetzt wird, die ein wasserlösliches Tensid enthält.

8. Verfahren nach den Ansprüche 6 oder 7, dadurch gekennzeichnet, daß die wasserspreitende Schicht nach dem Trocknen auf eine Temperatur von 80 bis 120°C erhitzt wird.

9. Verwendung des wasserspreitenden Kunststoffmaterials gemäß den Ansprüchen 1 bis 5 als Bedachungs- und/oder Verglasungsmaterial.

10. Verwendung des wasserspreitenden Kunststoffmaterials gemäß den Ansprüchen 1 bis 5 als Bedachungs- und/oder Verglasungsmaterial für Feuchträume.

**Revendications**

1. Matériau en matière plastique étalant l'eau, comprenant un corps de base en matière plastique à surface hydrophobe et, sur une partie au moins de sa surface, un enduit qui se compose d'une couche d'adhérence appliquée sur la surface de la matière plastique, en une matière polymère organique contenant des groupements polaires, insoluble et pratiquement non gonflante dans l'eau mais soluble dans les solvants organiques, et d'une couche étalant l'eau en un sol colloïdal minéral, appliquée sur la couche d'adhérence, caractérisé en ce que la couche étalant l'eau est constituée par des particules de grosseur colloïdale de bioxyde de silicium et/ou d'un oxyde métallique non soluble dans l'eau ou d'un bioxyde de silicium ou oxyde métallique modifié anioniquement, et ne contient pas de liant.

2. Matériau en matière plastique étalant l'eau selon la revendication 1, caractérisé en ce que les groupements polaires de la couche d'adhérence ne sont pas basiques et ne sont pas salins.

3. Matériau en matière plastique étalant l'eau selon la revendication 1 ou 2, caractérisé en ce que la couche étalant l'eau à une épaisseur de 0,01 à 4 µm.

4. Matériau en matière plastique étalant l'eau selon l'une quelconque des revendications 1 à 3, caractérisé en ce que la couche d'adhérence à une épaisseur de 0,01 à 20 µm.

5. Matériau en matière plastique étalant l'eau selon l'une quelconque des revendications 1 à 4, caractérisé en ce qu'il contient, par-dessus la couche étalant l'eau, un enduit soluble dans l'eau et une feuille de protection qui y adhére de façon arrachable.

6. Procédé de fabrication d'un matériau en matière plastique étalant l'eau selon la revendication 1 par enduction d'un corps de base en matière plastique qui présente une surface hydrophobe, tout d'abord avec une couche d'adhérence en une matière polymère organique contenant des groupements polaires qui est insoluble et pratiquement non gonflante dans l'eau, puis avec une couche étalant l'eau en un sol colloïdal minéral, caractérisé en ce qu'on utilise un sol colloïdal de bioxyde de silicium colloïdal et/ou d'un oxyde métallique colloïdal non soluble dans l'eau et/ou d'un bioxyde de silicium ou oxyde métallique modifié anioniquement, on on revêt la couche d'adhérence d'une solution ou dispersion d'un composé du silicium et/ou du métal qui peut être hydrolysé pour donner lesdits oxydes.

7. Procédé selon la revendication 6, caractérisé en ce qu'on utilise une solution ou dispersion colloïdale aqueuse qui contient un tenside hydrosoluble.

8. Procédé selon la revendication 6 ou 7, caractérisé en ce que la couche étalant l'eau est chauffée, après séchage, à une température de 80 à 120°C.

9. Utilisation du matériau en matière plastique étalant l'eau selon l'une quelconque des revendications 1 à 5 comme matériau de couverture et/ou de vitrage.

10. Utilisation du matériau en matière plastique étalant l'eau selon l'une quelconque des revendications 1 à 5 comme matériau de couverture et/ou de vitrage pour des locaux humides.

## Claims

1. Water-spreading plastics material, containing a substrate of plastics with a water-repellent surface and, on at least part of the surface thereof, a water-spreading coating which consists of an adhesion-promoting layer, applied to the surface of the plastics, of an organic polymer material which is insoluble in water and substantially non-swellable but soluble in organic solvents, containing polar groups, and a water-spreading layer, applied to the adhesion-promoting layer, of an inorganic colloid sol, characterised in that the water-spreading layer is made up of colloidal-sized particles of silicon dioxide and/or a water-insoluble metal oxide or an anionically modified silicon dioxide or metal oxide and contains no binders.

2. Water-spreading plastics material according to claim 1, characterised in that the polar groups of the adhesion promoting layer are not basic and are not salt-like.

3. Water-spreading plastics material according to claim 1 or 2, characterised in that the water-spreading layer is 0.01 to 4 µm thick.

4. Water-spreading plastics material according to claims 1 to 3, characterised in that the adhesion promoting layer is 0.01 to 20 µm thick.

5. Water-spreading plastics material according to claims 1 to 4, characterised in that it contains, above the water-spreading layer, a water-soluble coating and a removable protective film adhering thereto.

6. Process for producing a water-spreading plastics material according to claim 1 by coating a substrate of plastics which has a water-repellent surface first with an adhesion promoting layer of an organic polymer material which is insoluble in water and substantially non-swellable, containing polar groups, and then with a water-spreading layer of an inorganic colloid sol, characterised in that a colloid sol of colloidal silicon dioxide and/or a colloidal, water-insoluble metal oxide and/or an anionically modified silicon dioxide or metal oxide is used or the adhesion promoting layer is coated with a solution or dispersion of a compound of silicon and/or of the metal which can be hydrolysed to form the above-mentioned oxides.

7. Process according to claim 6, characterised in that an aqueous colloidal solution or dispersion containing a water-soluble surfactant is used.

8. Process according to claim 6 or 7, characterised in that the water-spreading layer is heated, after drying, to a temperature of 80 to 120°C.

9. Use of the water-spreading plastics material according to claims 1 to 5 as a roofing and/or glazing material.

10. Use of the water-spreading plastics material according to claims 1 to 5 as a roofing and/or glazing material for humid areas.